# EUROPÄISCHE PATENTANMELDUNG

(11) **EP 0 700 707 A1**
(43) Veröffentlichungstag der Anmeldung: **13.03.1996**
(21) Anmeldenummer: 94112294.7
(22) Anmeldetag: 05.08.1994
(51) Int. Cl.: B01D 17/00, B01D 17/025

(54) **Verfahren zur Behandlung von Fettabscheiderinhalten**

(71) Anmelder: PASSAVANT-WERKE AG, D-65322 Aarbergen 7 (DE)
(72) Erfinder: Recktenwald, Werner, D-65582 Diez (DE); Bachon, Ulrich, Dipl.-Ing., D-65582 Diez (DE)

(57) **Zusammenfassung**

Verfahren zur Erhöhung des Fettanteils in aus Fettabscheidern entsorgten wässrigen Abscheiderinhalten bei dem die Fettabscheiderinhalte in einem Pufferbehälter gespeichert, dann in einem Trennbehälter in einer Rotationsströmung einer Absetz- und Krählbehandlung unterworfen und danach als getrennte Phasen "Wasser", "Sinkstoffe" und "Fettstoffe" abgezogen werden und daß alle drei Phasen im je einer Trennstufe nachbehandelt werden.

## Beschreibung

Die Erfindung bezieht sich auf Fettabscheider, wie sie in Produktionsbetrieben der Nahrungsmittelindustrie und der Speisenzubereitung zur Behandlung der dort anfallenden Abwässer eingesetzt werden.

Bei einer Bestandsaufnahme in einigen Bundesländern wurde festgestellt, daß z.B. in Hessen in konventionellen Fettabscheidern monatlich ca. 200 t Fett zurückgehalten werden. Diese Abfallfette stellen ein wertvolles Wirtschaftsgut dar und sollten einer Wiederverwendung bzw. Wiederverwertung zugeführt werden.

Es ist üblich, die Fettabscheider in von der Norm vorgeschriebenen Zeitabständen vollständig zu entleeren und den Abscheiderinhalt einem Entsorgungsunternehmen für Sonderabfall zu überlassen. Sofern die Abfallfette frisch sind, können sie aufbereitet und in industriell verwertbare Stoffe umgewandelt werden. Störend bei dieser Aufbereitung ist der hohe Wassergehalt des Abscheiderinhalts (ca. 85 - 90%). Die Wasserphase wird bei der Aufbereitung thermisch verringert. Die Aufgabe, den Fettgehalt vor der Aufbereitung der Fette drastisch zu erhöhen, wird erfindungsgemäß dadurch gelöst, daß die Fettabscheiderinhalte in einem Pufferbehälter gespeichert, dann in einem Trennbehälter in einer Rotationsströmung einer Absetz- und einer Krählbehandlung unterworfen und danach als getrennte Phasen "Wasser", "Sinkstoffe" und "Fettstoffe" abgezogen und daß alle drei Phasen in je einer Trennstufe nachbehandelt werden. Hierdurch kann der Fettanteil auf bis zu 60 - 70 % erhöht und der Aufwand für die Abtrennung des restlichen Wassers erheblich verringert werden. Die aus dem Trennbehälter abgezogene Wasserphase wird vorteilhafterweise in einer Fettabscheiderstufe und/oder Flotationsstufe nachbehandelt. Dadurch werden niedrige Einleitwerte erreicht und eingehalten. Das in der Fettabscheiderstufe abgetrennte Fett wird vorzugsweise mit dem ganzen Abscheiderinhalt abgesaugt und über das Pufferbecken zurückgeleitet, wo das Fett nochmals in den Trennbehälter gegeben und dort entwässert und konzentriert wird. Auch die wässrige Phase, die in den beiden Nachbehandlungsstufen über den Sinkstoffen bzw. unter den Fettstoffen anfällt, wird vorteilhafterweise über den Pufferbehälter in den Trennbehälter zurückgeführt.

Das Aufkonzentrierungsverfahren wird vorzugsweise kontinuierlich betrieben. Da die Fettabscheiderinhalte richt kontinuierlich anfallen, sondern sporadisch angeliefert werden, wird der in dem Trennbehälter zu behandelnde Volumenstrom aus dem Pufferbehälter kontinuierlich entnommen.

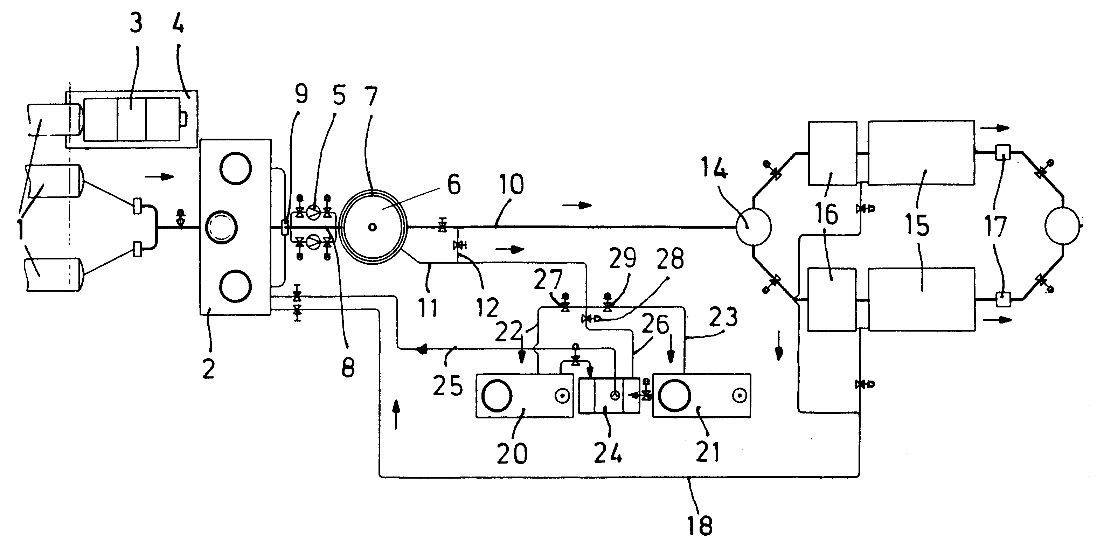

Weitere Einzelheiten des neuen Verfahrens werden anhand eines in der Zeichnung dargestellten Fließschemas erläutert, das eine Behandlungsanlage für Fettabscheiderinhalte schematisch im Grundriß zeigt.

Der Fettabscheiderinhalt wird üblicherweise mit Saugewagen 1 angeliefert und direkt in einen Pufferbehälter 2 gepumpt. Abgesetzte Sinkstoffe im Tank der Saugewagen werden mit geringem Wasseranteil in eine Absetzkipper-Mulde 3 entleert, die in einer Wanne 4 neben dem Pufferbehälter bereitsteht.

Aus dem Pufferbehälter wird über eine zweizeilige Pumpenanlage 5 der Trennbehälter 6 beschickt, der ein von oben angetriebenes Krähl- und Räumwerk 7 aufweist. In der Pumpenleitung 8 liegt noch ein Verteilventil 9, das den Kreislauf des abgepumpten Inhalts des Pufferbehälters zu zwei dort vorgesehenen Rühr- und Spülarmen ermöglicht. Diese Drehrührer können durch die in der Behälterdecke angeordnete Schachtöffnungen überwacht werden. Unter der einlaufseitigen Schachtöffnung liegt ein Grobfang für die mit dem Fettabscheiderinhalt angelieferten Grobstoffe, die im Pufferbehälter sofort absinken.

Der Trennbehälter 6 ist mit zwei Abläufen in verschiedenen Höhen ausgestattet. Der Ablauf 10 für die Wasserphase beginnt in mittlerer Höhe, derjenige für die Sinkstoff- und Fettstoffphase 11 am Boden. Zwischen beiden existiert eine absperrbare Verbindung 12, so daß also auch die Wasserphase aus dem nachgeschalteten Entwässerungscontainer 24 durch die Ablaufleitung 10 abgeführt werden kann.

Die Wasserphase durchfließt nach Verzweigung in einem Verteilbauwerk 14 eine Fettabscheideranlage 15 mit vorgeschaltetem (Öl)Schlammfang 16 und nachgeordnetem Probenahmerohr 17. Die beiden Zweige der zweizeiligen Anlage können wechselweise in Betrieb genommen werden. Der jeweils außer Betrieb befindliche Fettabscheider wird über die Rückführleitung 18 in den Pufferbehälter entleert. Sein Inhalt wird dort einer erneuten Trennbehandlung zugeführt.

Die nach dem Abzug der Wasserphase im Trennbehälter 6 verbliebenen Trennstoffe werden über die Leitung 11 abgelassen und gezielt einem der beiden Absitzbecken 20, 21 zugeleitet. Dabei hilft ein über die ganze Höhe des Trennbehälters verlaufendes Schauglas, das erkennen läßt, wann von der Sinkstoff- (22) auf die Fettstoffabflußleitung 23 umgeschaltet werden muß. Die in den beiden Absitzbecken 20, 21 anfallende Wasserphase wird in einem Entwässerungscontainer 24 gesammelt und später in den Pufferbehälter zurückgepumpt (Leitung 25).

Auch die Wasserphase, die gegebenenfalls noch im Trennbehälter 6 zwischen den beiden Trennstoffschichten ansteht, kann über eine Zweigleitung 26 in diesen Container gegeben werden.

Der hier beschriebene Betrieb der Entnahme der Trennstoffe ist diskontinuierlich. Die Fettabscheiderinhalte werden bei entsprechender Abscheiderfüllung in den Pufferbehälter gepumpt. Eine um die abgetrennten Sinkstoff- und Fettstoffmengen verminderte Wasserphase verläßt dann den Trennbehälter via Fettabscheideranlage. Zum Ablassen der Trennstoffe aus dem Trennbehälter wird der Zulauf unterbrochen und der Wasserablauf 10 verschlossen. Durch Öffnen des Bodenablaufs 11 und des Absperrventils 27 in der Sinkstoffleitung 22 wird zuerst die Sinkstoffphase in das Sinkstoff-Absitzbecken 20 gegeben. Danach folgt die in der Mitte anstehende Wasserphase, wozu das in der Wasserleitung 26 liegende Absperrventil 28 geöffnet wird. Zuletzt wird die Fettphase über das geöffnete Absperrventil 29 in den Fettstoff-Absitzbehälter 21 geleitet. Die in den beiden Absitzbehältern abgetrennte Wasserphase kann ihrerseits nach einer gewissen Absitzzeit diskontinuierlich in den Entwässerungscontainer 24 abgelassen werden. Sobald dieser gefüllt ist, wird sein Inhalt in den Pufferbehälter 2 gepumpt.

Die Absitzbecken 20, 21 sind Wechselbehälter, die, sobald sie gefüllt sind, gegen leere ausgetauscht werden. Die vollen Wechselbehälter werden zu dem Verwertungsunternehmen transportiert.

## Patentansprüche

1. Verfahren zur Erhöhung des Fettanteils in aus Fettabscheidern entsorgten wässrigen Abscheiderinhalten, **dadurch** **gekennzeichnet**, daß die Fettabscheiderinhalte in einem Pufferbehälter gespeichert, dann in einem Trennbehälter in einer Rotationsströmung einer Absetz- und Krählbehandlung unterworfen und danach als getrennte Phasen "Wasser", "Sinkstoffe" und "Fettstoffe" abgezogen werden und daß alle drei Phasen in je einer 10 Abtrennstufe nachbehandelt werden.

2. Verfahren nach Anspruch 1, **dadurch** **gekennzeichnet**, daß die Wasserphase aus dem Trennbehälter in einer Fettabscheidestufe nachbehandelt wird und daß der bei der Entleerung der Fettabscheidestufe anfallende Abscheiderinhalt in den Pufferbehälter zurückgeleitet wird.

3. Verfahren nach Anspruch 1 oder 2, **dadurch** **gekennzeichnet**, daß die Nachbehandlungsstufen für die Sinkstoff- und die Fettphase als transportfähige Container ausgebildet sind.

4. Verfahren nach Anspruch 1 bis 3, **dadurch** **gekennzeichnet**, daß die überstehende Wasserphase aus der Sinkstoffabscheidestufe und die unterstehende Wasserphase aus der Fettabscheidestufe in den Pufferbehälter zurückgeleitet werden.

5. Verfahren nach Anspruch 1, **dadurch** **gekennzeichnet**, daß in dem Pufferbehälter eine von Flüssigkeit gespeiste 10 Rühreinrichtung vorgesehen ist.

6. Verfahren nach Anspruch 5, **dadurch** **gekennzeichnet**, daß in dem Pufferbehälter eine Spüleinrichtung vorgesehen ist.

7. Verfahren nach einem oder mehreren der Ansprüche 1 bis 6, **dadurch** **gekennzeichnet**, daß in dem Trennbehälter eine Spüleinrichtung vorgesehen ist.

8. Verfahren nach Anspruch 5, **dadurch** **gekennzeichnet**, daß dem Pufferbehälter eine Fangstufe für Grobstoffe vorgeschaltet ist.

9. Verfahren nach einem oder mehreren der Ansprüche 1 bis 8, **dadurch gekennzeichnet** daß die Absetz- und Krählbehandlung im kontinuierlichen Durchlauf erfolgt.

10. Verfahren nach Anspruch 9, **dadurch** **gekennzeichnet**, daß die Sinkstoff- und Fettphase kontinuierlich abgezogen werden und daß die Lage der Grenzschichten zwischen den drei Phasen laufend mit Ultraschall überwacht wird.

11. Verfahren nach Anspruch 10, **dadurch** **gekennzeichnet**, daß der Trennbehälter unter Überdruck betrieben und der Abzug der drei Phasen durch von der Grenzschichtmessung gesteuerte Auslaßventile geregelt wird.
